Europäisches Patentamt

European Patent Office

Office européen des brevets

(11) Veröffentlichungsnummer : **0 172 804**
**B1**

(12) **EUROPÄISCHE PATENTSCHRIFT**

(45) Veröffentlichungstag der Patentschrift :
02.12.87

(21) Anmeldenummer : 85890187.9

(22) Anmeldetag : 20.08.85

(51) Int. Cl.⁴ : **B 64 F   1/32**

(54) **Hubfahrzeug für die Ver- und Entsorgung von Flugzeugen.**

(30) Priorität : **21.08.84 AT 2665/84**

(43) Veröffentlichungstag der Anmeldung :
**26.02.86 Patentblatt 86/09**

(45) Bekanntmachung des Hinweises auf die Patenterteilung : **02.12.87 Patentblatt 87/49**

(84) Benannte Vertragsstaaten :
**CH DE FR GB LI NL**

(56) Entgegenhaltungen :
**EP-A- 0 019 116**
**FR-A- 2 496 048**
**GB-A- 2 035 949**

(73) Patentinhaber : **Zellinger Gesellschaft m.b.H.
Kremstalstrasse 102
A-4050 Traun (AT)**

(72) Erfinder : **Zellinger, Hans
Rosenau 16
A-4271 St. Oswald b. Freistadt (AT)**
Erfinder : **Zellinger, Fritz
Flachberg 55
A-4810 Gmunden (AT)**

(74) Vertreter : **Hübscher, Helmut, Dipl.-Ing. et al
Patentanwälte Dipl.-Ing. Gerhard Hübscher Dipl.-Ing.
Helmut Hübscher Dipl.-Ing. Heiner Hübscher Spittelwiese 7
A-4020 (AT)**

## Beschreibung

Die Erfindung betrifft ein Hubfahrzeug für die Ver- und Entsorgung von Flugzeugen, insbesondere deren Bordküche, mit einem Fahrgestell, auf dem ein Fahrerhaus und hinter diesem ein mittels einer Hubeinrichtung heb- und senkbarer Ladekoffer angeordnet sind, an dessen Frontseite oberhalb des Fahrerhauses eine Ladeplattform auf- und abbewegbar angebracht ist, die sich bei angehobenem Ladekoffer auf der Höhe von dessen Boden und bei abgesenktem Ladekoffer unmittelbar oberhalb des Fahrerhauses befindet und die zum Anschluß an die Schwelle einer Ladeöffnung des Flugzeuges einen im Vergleich zum Ladekoffer schmäleren, über die Breite des Ladekoffers verstellbaren Ausleger aufweist, wie er z. B. durch die EP-A-0 019 116 bekannt ist.

Hubfahrzeuge dieser Art nehmen die zu transportierenden Güter, beispielsweise die bereits in Portionen verpackte Bordverpflegung oder zollfreie Güter meist in fahrbaren Containern oder sonstigen fahrbaren Ladeeinheiten, sogenannten Trolleys auf, die in ihrer Breite an die Türbreite und die Gangwaybreite von Flugzeugen angepaßt sind. Während der Fahrt im Hubfahrzeug werden die Container im Ladekoffer festgezurrt.

Normale Hubfahrzeuge für die Bordküchenabfertigung, sogenannte Catering-Fahrzeuge sind unter anderem aus der CH-A-639 326 bekannt. Sie besitzen meist ein tief angebrachtes Fahrerhaus, über das ein über die gesamte Kofferbreite reichender, nur in seiner Höhe einstellbarer Teil der Ladeplattform auskragt. Um in Flugzeuge mit extrem niedriger Schwellenhöhe ordnungsgemäß verladen zu können, ist es auch bekannt, ein Fahrerhaus zu verwenden, dessen Oberteil absenkbar ist, wobei der Fahrer das Fahrerhaus verläßt. Dadurch kann die Ladeplattform auf die niedrige Schwellenhöhe eingestellt werden. Über die Breite der Ladeplattform ist bei allen diesen Konstruktionen der schmälere und meist teleskopisch ausschiebbare sowie mit Fendern an den Flugzeugrumpf andrückbare Ausleger parallel zu sich selbst verstellbar. Es sind auch Trittplatten zur allfälligen Überbrückung eines Spaltes zwischen Auslegerende und Türschwelle im Einsatz. Bei der Ladearbeit wird das Fahrzeug zur Erzielung einer ausreichenden Kippsicherheit auch bei starkem Windangriff mit absenkbaren Standstützen am Boden abgestützt. Es können gesonderte Hubeinrichtungen für die Plattform und den Ladekoffer vorgesehen sein. Nach einer anderen Ausführung ist der Ladekoffer aus seiner Fahrstellung zunächst für sich allein bis zur Ladeplattform anhebbar und nimmt diese dann beim weiteren Anheben mit. Die Türschwellenhöhe üblicher Verkehrsflugzeuge an den Versorgungseinstiegen liegt zwischen 2 150 und 5 500 mm. Auf diese Höhe müssen der Boden des Ladekoffers und die Plattform angehoben werden. Bevorzugt werden zum Anheben des Ladekoffers hydraulisch betätigte Hubscheren verwendet.

Neben den beschriebenen Catering-Fahrzeugen sind auch meist kleinere Nachreiche-Hubfahrzeuge im Einsatz, die es ermöglichen sollen, sozusagen im letzten Augenblick vor dem Start noch Waren von Bord des Flugzeuges zu bringen. Ein bekanntes Nachreiche-Hubfahrzeug besitzt eine zwischen Fahrerhaus und Ladekoffer versenkbare Plattform und einen Ausleger, der in der Ruhestellung neben dem praktisch halbierten und nur für einen Fahrer bestimmten Fahrerhaus aufrastet. Auch hier ist der Ausleger über die Breite der Ladeplattform verstellbar und mit einem teleskopischen Auszug versehen. Bei Catering-Fahrzeugen und bei Nachreiche-Hubfahrzeugen muß das Hubfahrzeug zur Erzielung eines ordnungsgemäßen Anschlusses mit seiner Längsachse etwa normal zur Öffnungsebene der Flugzeugtür ausgerichtet werden. Bei manchen Flugzeugtypen ist aber die Versorgungstür ungünstig angeordnet, so daß sie von einem Hubfahrzeug mit normal breitem Ladekoffer in der beschriebenen Ausrichtung zur Flugzeugwand nicht erreicht werden kann. Es gibt auch Flugzeuge, bei denen der Abstand zwischen den Hecktriebwerken und den Tragflächen bzw. Tragflächenspoilern so klein ist, daß ein Einfahren eines normal breiten Hubfahrzeuges in der beschriebenen Normallage zum Flugzeug unmöglich wird. Die Verwendung von Hubfahrzeugen mit schmälerem Ladekoffer für derartige Flugzeuge wäre wegen des zu geringen Laderaumes und der schlechten Unterbringungs- bzw. Manövriermöglichkeit der Container bzw. Trolleys im Ladekoffer unrationell.

Aufgabe der Erfindung ist die Schaffung eines Hubfahrzeuges, bei dem eine einwandfreie Einstellung des Auslegers auf eine Türöffnung des Flugzeuges möglich, dabei aber für das Einmanövrieren des Fahrzeuges ein größerer Spielraum vorhanden ist.

Die Erfindung besteht darin, daß der Ausleger an der Ladeplattform um eine im Abstand von der Frontseite des Ladekoffers angeordnete Vertikalachse schwenkbar gelagert ist.

Zusätzlich zur Schwenkverstellung könnte auch eine geringe Seitenverstellbarkeit für den Ausleger bzw. eine zusätzliche Schwenkbarkeit des nach einer bevorzugten Ausbildung teleskopisch ausziehbaren Auslegerteiles vorgesehen werden. Durch die erfindungsgemäße Ausführung wird es möglich, mit dem Ausleger einen ordnungsgemäßen Anschluß an die Türöffnung eines Flugzeuges auch bei schräg zum Flugzeug stehendem Hubfahrzeug herzustellen, wobei meist das freie Auslegerende sogar über die Kofferbreite hinaus verstellt werden kann. Die Schwenkachse kann nahe zum vorderen Ende des Hubfahrzeuges verlegt werden. Bei ungünstig angeordneter Flugzeugtür und geringem Triebwerks-Tragflächenabstand ist häufig mit schräggestelltem Fahrzeug noch ein Einmanövrieren in eine ordnungsgemäße Ladestellung möglich. Es kann daher in der Praxis ein normal breites Catering-Hubfahrzeug als Nachreiche-Hubfahrzeug eingesetzt werden.

Aus Sicherheitsgründen ist zu fordern, daß die Ladeplattform und auch der Ausleger mit Geländern ausgestattet werden. Bei den bekannten, über die Breite des feststehenden Teiles der Ladeplattform verschiebbaren Auslegern ergeben sich für die Überbrückung der vom Ausleger freigelassenen Breitseiten der Ladeplattform aufwendige und störungsanfällige Geländerkonstruktionen, z. B. aus Seilen.

Demgegenüber wird eine Konstruktion vorgesehen, bei der an der Ladeplattform und am Ausleger an beiden Seiten vorgesehene Längsgeländer über Geländerstücke verbunden sind, die jeweils mit ihrem einen Ende an dem plattformseitigen Ende des Längsgeländers des Auslegers gelenkig gelagert und mit ihrem anderen Ende entlang des zugeordneten Längsgeländers der Ladeplattform verschiebbar geführt sind.

Bei dieser Geländerkonstruktion ist der begehbare Raum stets durch hinreichend feste Geländer abgesichert. Gegenüber bekannten Hubfahrzeugen wird auch die Manövrierung der fahrbaren Ladeeinheiten über die Ladeplattform vereinfacht und erleichtert. Dies wird noch dadurch begünstigt, daß nach einer Weiterbildung die Ladeplattform einen sich von der Kofferbreite zum Ausleger trapezförmig verjüngenden Grundriß aufweist. Diese Grundrißform erleichtert auch das Einmanövrieren des Hubfahrzeuges im Flugzeugbereich.

Weitere Einzelheiten und Vorteile des Erfindungsgegenstandes gehen aus der nachfolgenden Zeichnungsbeschreibung hervor.

In der Zeichnung ist der Erfindungsgegenstand beispielsweise veranschaulicht. Es zeigen

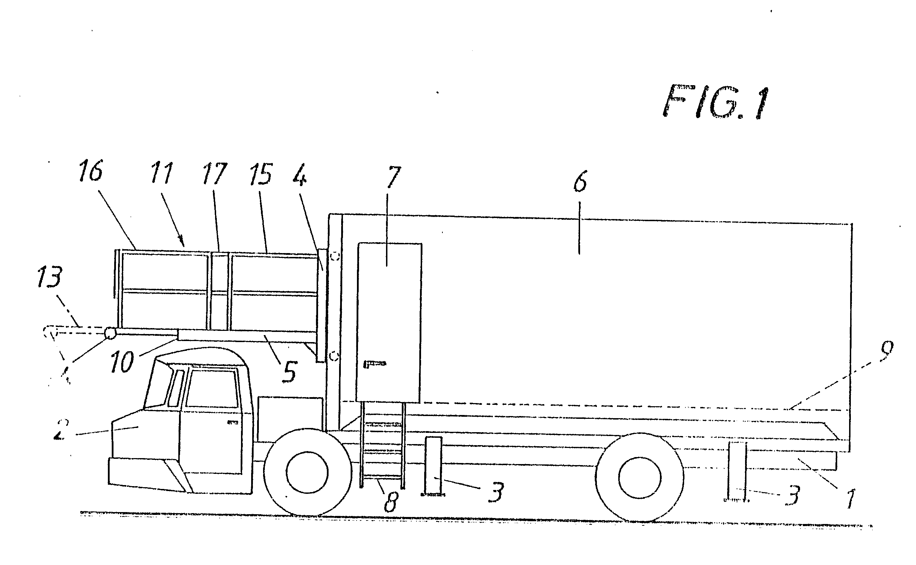

Fig. 1 ein erfindungsgemäßes Hubfahrzeug schematisiert in Seitenansicht,

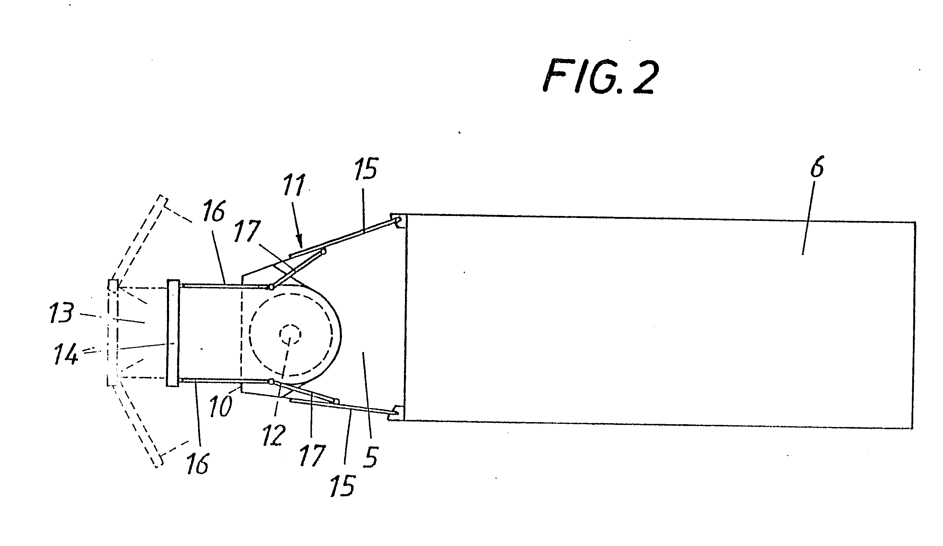

Fig. 2 eine Draufsicht auf den nur in seinen Umrissen dargestellten Ladekoffer mit der Ladeplattform und dem Ausleger,

Fig. 3 eine entsprechende Draufsicht beim Einsatz des Hubfahrzeuges, wobei ein Flugzeug in seinen Umrissen dargestellt wurde und

Fig. 4 eine der Fig. 3 entsprechende Draufsicht auf Führerhaus und Fahrgestell des Fahrzeuges bei abgenommenem Ladekoffer und abgenommener Ladeplattform.

Das dargestellte Hubfahrzeug besitzt ein Fahrgestell 1, an dem vorne ein tiefgesetztes Fahrerhaus 2 angebracht ist, so daß beispielsweise die Dachhöhe des Fahrerhauses 2 höchstens 2 000 mm beträgt.

Das Fahrgestell 1 ist über hydraulisch ausfahrbare Standstützen 3 während der Verladearbeiten am Boden abstützbar. Am Fahrgestell 1 ist eine Vertikalführung 4 vorgesehen, in der eine Ladeplattform 5 geführt ist. Ein Ladekoffer 6, der über eine Seitentür 7 und eine Treppe 8 begehbar ist und neckseitig eine durch eine Klappe verschlossene Ladeöffnung sowie frontseitig eine ebenfalls verschließbare Entladeöffnung aufweist, ist über ein nicht dargestelltes, an und für sich bekanntes Hubwerk, insbesondere hydraulische Hubwerke mit Scherenführungen, auf die jeweilige Türschwellenhöhe der Versorgungseinstiege von Flugzeugen anhebbar. Sobald der Boden 9 des Ladekoffers 6 mit der Ladeplattform 5 fluchtet, nimmt der Koffer 6 bei seiner Hubbewegung die Ladeplattform 5 nach oben mit. Dies kann mit Hilfe der Hubvorrichtung des Ladekoffers allein oder auch zusätzlich mit Hilfe weiterer Hubvorrichtungen für die Ladeplattform 5 geschehen.

Die Ladeplattform 5 hat eine in Draufsicht gesehen trapezförmige, sich zum vorderen Rand 10, der etwa mit dem vorderen Rand des Fahrerhauses 2 bzw. der Stoßstange fluchtet, verjüngende Grundform. An der Plattform 5 ist ein Ausleger 11 angebracht, dessen Breite beispielsweise der halben Breite des Ladekoffers 6 entspricht und der in einen oberseitigen Ausschnitt der Ladeplattform 5 versenkt ist, so daß die begehbaren Bodenteile von Ladeplattform 5 und Ausleger 11 auf gleicher Höhe liegen. Der Ausleger 11 ist um eine nahe, beispielsweise in einen etwa der halben Auslegerbreite entsprechenden Abstand von dem vorderen Rand der Plattform 5 liegende Vertikalachse 12 schwenkbar gelagert. Ferner ist aus dem Ausleger 11 ein Endteil 13 teleskopisch ausschiebbar, der mit einem Fender 14 an einen Flugzeugrumpf 19 angedrückt werden kann. Die Ladeplattform 5, der Ausleger 11 und gegebenenfalls auch der Endteil 13 sind mit Längsgeländern 15, 16 versehen. Geländerstücke 17 schließen an jeder Seite die Lücke zwischen den Längsgeländern 15, 16. Diese Geländerstücke 17 sind an den Enden der Geländer 16 schwenkbar gelagert und mit den anderen Rändern entlang der Seitengeländer 15 in Führungen verschiebbar.

Beim Lade- und Entladevorgang bilden die Seitengeländer 15, 16 und die schrägstehenden Geländerstücke 17 Leitschienen für die Container, Trolleys od. dgl., wobei sich auch für die ganz vorne im Ladekoffer 6 befindlichen Container usw. eine einfache Manövrierbarkeit ergibt. Für das Ausschieben des Endteiles 13 des Auslegers 11 und für die Schwenkverstellung des Auslegers 11 selbst können mechanische Triebwerke dienen. Vorzugsweise werden aber hydraulische Triebwerke eingesetzt, für die im Plattformbereich Steuereinrichtungen angebracht sind. Für die Schwenkverstellung des Auslegers 11 können hydraulische Triebwerke auch auf die verschiebbaren Enden der Geländerstücke 17 wirken.

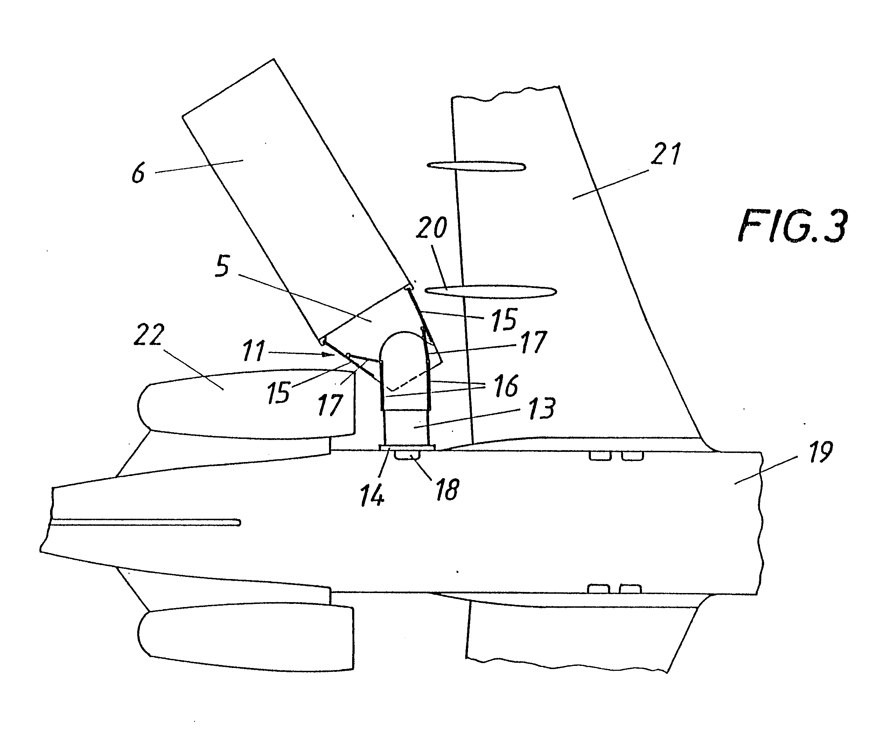

Fig. 3 zeigt, daß es mit dem erfindungsgemäßen Hubfahrzeug möglich ist, den teleskopisch ausziehbaren Teil 13 des Auslegers 11 an eine Ladeluke 18 in einem Flugzeugrumpf 19 heranzumanövrieren, obwohl der in Richtung der Flugzeug-Längsachse gemessene Abstand zwischen Spoilern 20 an den Tragflächen 21 und Hecktriebwerken 22 kleiner ist als die Breite des Ladekoffers 6.

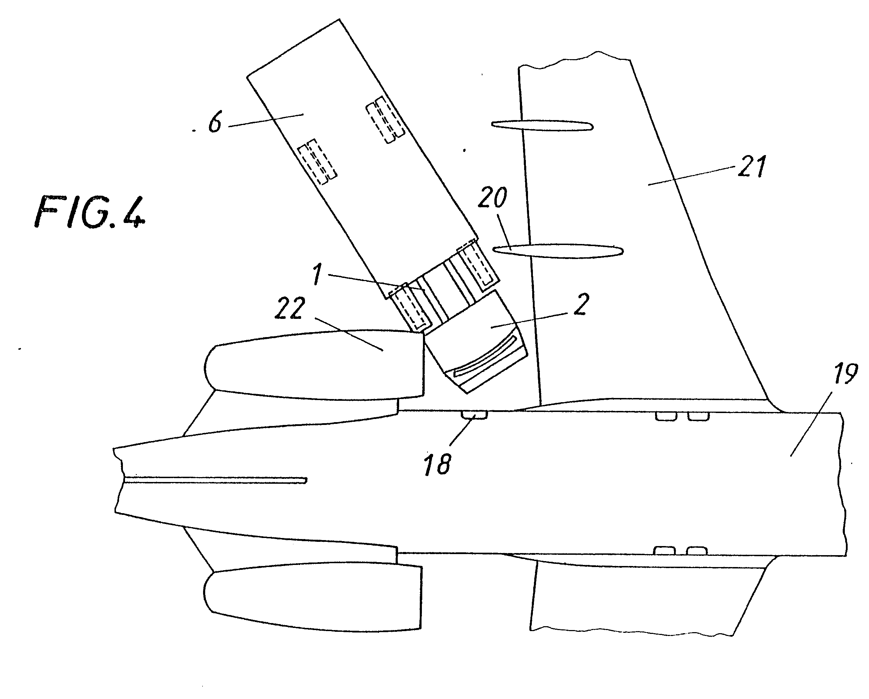

Wie Fig. 4 zeigt, kann man bei dem Heranmanövrieren des Fahrzeuges mit dem Fahrerhaus 2 und dem einen Vorderrad den vorderen Rand des Triebwerkes 22 unterfahren.

**Patentansprüche**

1. Hubfahrzeug für die Ver- und Entsorgung von Flugzeugen, insbesondere deren Bordküche, mit einem Fahrgestell (1), auf dem ein Fahrerhaus (2) und hinter diesem ein mittels einer Hubeinrichtung heb- und senkbarer Ladekoffer (6) angeordnet sind, an dessen Frontseite oberhalb des Fahrerhauses (2) eine Ladeplattform (5) auf- und abbewegbar angebracht ist, die sich bei angehobenem Ladekoffer (6) auf der Höhe von dessen Boden (9) und bei abgesenktem Ladekoffer (6) unmittelbar oberhalb des Fahrerhauses (2) befindet und die zum Anschluß an die Schwelle einer Ladeöffnung des Flugzeuges einen im Vergleich zum Ladekoffer schmäleren, über die Breite des Ladekoffers (6) verstellbaren Ausleger (11) aufweist, dadurch gekennzeichnet, daß der Ausleger (11) an der Ladeplattform (5) um eine im Abstand vor der Frontseite des Ladekoffers (6) angeordnete Vertikalachse (12) schwenkbar gelagert ist.

2. Hubfahrzeug nach Anspruch 1, dadurch gekennzeichnet, daß der Ausleger (11) einen teleskopisch ausschiebbaren Endteil (13) aufweist, der eine zusätzliche seitliche Schwenkbarkeit aufweisen kann.

3. Hubfahrzeug nach Anspruch 1 oder 2, dadurch gekennzeichnet, daß an der Ladeplattform (5) und am Ausleger (11) an beiden Seiten vorgesehene Längsgeländer (15, 16) über Geländerstücke (17) verbunden sind, die jeweils mit ihrem einen Ende an dem plattformseitigen Ende des Längsgeländers (16) des Auslegers (11) gelenkig gelagert und mit ihrem anderen Ende entlang des zugeordneten Längsgeländers (15) der Ladeplattform (5) verschiebbar geführt sind.

4. Hubfahrzeug nach einem der Ansprüche 1 bis 3, dadurch gekennzeichnet, daß die Ladeplattform (5) einen sich von der Breite des Ladekoffers (6) zum Ausleger (11) trapezförmig verjüngenden Grundriß aufweist.

## Claims

1. A lifting truck for supplying material to and for removing waste material from aircraft, particularly to and from the galley of the aircraft, comprising a chassis (1), on which a driver's cab (2) is mounted and behind said driver's cab a loading box (6), which is adapted to be raised and lowered by lifting means and is provided with a loading platform (5) that is attached to the front side of the loading box (6) above the driver's cab (2) and is adapted to be moved up and down and is disposed on the level of the bottom (9) of the loading box (6) when the latter has been raised whereas the platform is closely above the driver's cab (2) when the loading case (6) has been lowered, and for a connection to a sill of a loading opening of the aircraft said platform is provided with a cantilever (11), which is narrower than the loading box and is adjustable over the width of the loading box (6), characterized in that the cantilever (11) is pivoted to the loading platform (5) on a vertical axis (12) which is spaced in front of the front side of the loading box (6).

2. A lifting truck according to claim 1, characterized in that the cantilever (11) comprises a telescopically extensible end portion (13), which is optionally pivotally movable in a lateral direction.

3. A lifting truck according to claim 1 or 2, characterized in that longitudinal railings (15, 16) are connected to the loading platform (5) and to the jib (11) on both sides and are connected by railing sections (17), each of which is hinged at one end to the longitudinal railing (16) of the cantilever (11) at that end thereof which is near the platform and each of said railing sections (17) is slidably guided at its other end along the associated longitudinal railing (15) of the loading platform (5).

4. A lifting truck according to any of claims 1 to 3, characterized in that the loading platform (5) has in a plan view a trapezoidal configuration which tapers from the width of the loading box (6) to the jib (11).

## Revendications

1. Véhicule de levage pour l'alimentation et la désalimentation d'avions, en particulier de leur cuisine de bord, muni d'un châssis roulant (1) sur lequel sont disposés une cabine de conducteur (2) et derrière celle-ci, un coffre de chargement (6) pouvant être levé et abaissé au moyen d'un appareil de levage et au côté avant duquel, au-dessus de la cabine de conducteur (2), est disposée de manière à pouvoir se lever et s'abaisser une plate-forme de chargement (5) qui, lorsque le coffre de chargement (6) est levé, se trouve à la hauteur du fond (9) de celui-ci et, lorsque le coffre de chargement (6) est abaissé, immédiatement au-dessus de la cabine de conducteur (2) et qui présente, pour le raccordement au seuil d'une ouverture de chargement de l'avion, une flèche (11) plus étroite relativement au coffre de chargement, réglable sur la largeur du coffre de chargement (6), caractérisé par le fait que la flèche (11) est montée de manière à pouvoir pivoter sur la plate-forme de chargement (5) autour d'un axe vertical (12) disposé à distance du côté frontal du coffre de chargement (6).

2. Véhicule de levage selon la revendication 1, caractérisé par le fait que la flèche (11) présente une partie terminale (13) pouvant se déployer télescopiquement et qui peut présenter une possibilité supplémentaire de pivotement latéral.

3. Véhicule de levage selon l'une des revendications 1 et 2, caractérisé par le fait que des balustrades longitudinales (15, 16), prévues des deux côtés sur la plate-forme de chargement (5) et sur la flèche (11), sont reliées par l'intermédiaire de tronçons de balustrade (17) qui sont chacun montés de façon articulée, par l'une de leurs extrémités, sur l'extrémité de la balustrade longitudinale (16) de la flèche (11) qui est du côté de la plate-forme et qui sont guidés, par leur autre extrémité, de manière à pouvoir coulisser le long de la balustrade longitudinale adjointe (15) de la plate-forme de chargement (5).

4. Véhicule de levage selon l'une des revendications 1 à 3, caractérisé par le fait que la plate-forme de chargement (5) présente une forme dans le plan qui va en se rétrécissant trapézoïdalement, de la largeur du coffre de chargement (6) à la flèche (11).

FIG.1

FIG. 2

0 172 804

FIG.3

0 172 804

FIG.4